# EUROPÄISCHE PATENTSCHRIFT

(11) **EP 3 470 878 B1**
(45) Veröffentlichungstag und Bekanntmachung des Hinweises auf die Patenterteilung: **19.04.2023**
(21) Anmeldenummer: 17196385.3
(22) Anmeldetag: 13.10.2017
(51) Int. Cl.: G01S 17/08, G01D 5/347, G01S 7/48

(54) **OPTISCHER SENSOR**
OPTICAL SENSOR
CAPTEUR OPTIQUE

(43) Veröffentlichungstag der Anmeldung: 17.04.2019
(73) Patentinhaber: Leuze electronic GmbH + Co. KG, 73277 Owen/Teck (DE)
(72) Erfinder: Wolf, Tilo, 73240 Wendlingen (DE); Sanzi, Dr. Friedrich, 73230 Kirchheim/Teck (DE); Linsenmayer, Jörg, 73272 Neidlingen (DE); Struckmeier, Anselm, 73277 Owen/Teck (DE)
(74) Vertreter: Ruckh, Rainer Gerhard

(56) Entgegenhaltungen:
- DE-A1-102006 025 045
- US-A1- 2013 332 112
- US-A1- 2015 153 169

## Beschreibung

Die Erfindung betrifft einen optischen Sensor.

Derartige optische Sensoren dienen allgemein zur Detektion von Objekten. Hierzu weist der optische Sensor eine Sende-/Empfangseinheit mit wenigstens einem Sendelichtstrahlen emittierenden Sender und einem Empfangslichtstrahlen empfangenden Empfänger auf. Zur Objektdetektion werden typischerweise die zum Senden emittierten Sendelichtstrahlen zum Objekt geführt, von diesem reflektiert und dann als Empfangslichtstrahlen weiter zum Empfänger geführt. Die dadurch am Ausgang des Empfängers anstehenden Empfangssignale werden in einer Auswerteeinheit des optischen Sensors ausgewertet, wodurch eine zeitliche Folge von Messwerten generiert wird.

Der optische Sensor kann beispielsweise als Distanzsensor ausgebildet sein. Dann sind die Messwerte Distanzwerte, die die Distanz des Objekts zum optischen Sensor angeben.

Die Messwerte sind prinzipbedingt fehlerbehaftet. Beispielsweise durch Messwertrauschen sind die Messwerte Schwankungen unterworfen. Zur Reduzierung derartiger Messwertfehler ist es bekannt, eine Mittelung über mehrere Messwerte durchzuführen. Durch Rauschen oder sonstige Effekte bedingte Schwankungen der Messwerte können dadurch reduziert werden, so dass die Messfehler bei der Objektdetektion reduziert werden.

Derartige Mittelungsverfahren führen dann zu einer effizienten Reduzierung der Messfehler und damit zu einer erhöhten Messgenauigkeit, wenn sich die Position des Objekts zum optischen Sensor während der Objektdetektion nicht ändert.

Probleme treten jedoch dann auf, wenn sich das Objekt relativ zum optischen Sensor bewegt, so dass sich dessen Position oder dessen Distanz zum optischen Sensor während der Mittelwertbildung der Messwerte ändert. Ist der optische Sensor beispielsweise als Distanzsensor ausgebildet, der Messwerte in Form von Distanzwerten generiert, so führt eine Mittelung der Messwerte dann zu einer Verfälschung der Messergebnisse, wenn sich während der Mittelung der Messwerte die Distanz des Objekts zum optischen Sensor ändert.

Die US 2015/01531691 A1 betrifft einen Distanzsensor, der als optischer Sensor ausgebildet ist und einen Sendelichtstrahlen emittierenden Sender sowie einen Empfangslichtstrahlen empfangenden Empfänger aufweist. In einem ersten Prozessor wird der Mittelwert der jeweils letzten N Distanzwerte, die gemessen wurden, bestimmt. In einem zweiten Prozessor wird der Mittelwert der letzten M Distanzwerte, die gemessen wurden, bestimmt, wobei M < N ist. In einer Vergleichseinheit wird die Differenz dieser Mittelwerte gebildet, um diese Differenz mit einem Schwellwert zu vergleichen.

Die in DE 10 2006 025 045 A1 beschriebene optoelektronische Vorrichtung umfasst einen Sensor mit einem einen Sendelichtstrahlen emittierenden Sender, einem Empfangslichtstrahlen empfangenden Empfänger, Mitteln zur Führung der Sendelichtstrahlen innerhalb eines Abtastbereichs sowie eine Auswerteeinheit zur Auswertung der am Ausgang des Empfängers anstehenden Empfangssignale sowie ein aus einer Anordnung von Marken gebildetes Positionsmaßsystems ist mittels des Sensors dessen Position relativ zum Poisitionsmaßsystem bestimmbar. In Abhängigkeit der Geschwindigkeit des Sensors relativ zum Positionsmaßsystem ist der Sender des Sensors während vorgegebener Zeitintervalle abgeschaltet.

Der Erfindung liegt die Aufgabe zugrunde, einen optischen Sensor der eingangs genannten Art bereitzuhalten, bei welchem insbesondere auch für relativ zum optischen Sensor bewegte Objekte eine genaue und präzise Objektdetektion gewährleistet ist.

Zur Lösung dieser Aufgabe sind die Merkmale der unabhängigen Ansprüche vorgesehen. Vorteilhafte Ausführungsformen und zweckmäßige Weiterbildungen sind in den abhängigen Ansprüchen beschrieben.

Die Erfindung betrifft einen optischen Sensor zur Detektion von Objekten mit einer Sende-/Empfangseinheit mit einem Sendelichtstrahlen emittierenden Sender und einem Empfangslichtstrahlen empfangenden Empfänger sowie mit einer Auswerteeinheit, in welcher in Abhängigkeit von Empfangssignalen des Empfängers eine zeitliche Folge von Messwerten generiert ist, wobei die Messwerte Distanzwerte oder Positionswerte sind. Ein adaptives Filter in Form eines rekursiven IIR-Filters zweiter Ordnung ist vorgesehen, in welchem die Messwerte gefiltert sind, wobei das adaptive Filter variable Filterkoeffizienten aufweist, die an die aktuellen Änderungen der Messwerte angepasst sind.

Die Erfindung betrifft weiterhin ein Verfahren zur Detektion von Objekten mittels eines optischen Sensors.

Der Grundgedanke der Erfindung besteht somit darin, zur Filterung der Messwerte und damit zur Erhöhung der Messwertgenauigkeit des optischen Sensors ein adaptives Filter einzusetzen, dessen Filterkoeffizienten an aktuelle Änderungen der Messwerte während des Betriebs des optischen Sensors fortlaufend angepasst werden. Dadurch erfolgt auch bei sich schnell ändernden Messwerten eine an diese Änderungen angepasste Filterung, sodass die Änderungen der Messwerte keine Messwertverfälschungen bei den durchzuführenden Filterungen verursachen.

Generell wird mit der erfindungsgemäßen Filterung das Messwertrauschen der erhaltenen Ausgangssignale verbessert und dadurch die Messwertgenauigkeit des optischen Sensors verbessert. Das Messwertrauschen der dem adaptiven Trichter zugeführten Eingangssignale, das heißt der aus den Empfangssignalen generierten Folge von Messwerten, hängt insbesondere von der Aperturgröße des Empfängers ab. Durch die erfindungsgemäße Filterung kann ein höheres Messwertrauschen der Eingangssignale in Kauf genommen werden. Dadurch kann eine Kostenreduktion des optischen Sensors und/oder eine Reduktion der Baugröße des optischen Sensors erzielt werden, ohne dass Einbußen in der Messgenauigkeit hingenommen werden müssen.

Die mit dem optischen Sensor generierten Messwerte sind generell Distanzwerte oder Positionswerte. Schnelle Änderungen der Messwerte treten damit bei hohen Relativgeschwindigkeiten des optischen Sensors auf. Mit dem erfindungsgemäßen optischen Sensor können demzufolge auch sich schnell bewegende Objekte präzise hinsichtlich ihrer Position beziehungsweise ihrer Distanz zum optischen Sensor erfasst werden.

Gemäß einer vorteilhaften Ausführungsform ist in der Auswerteeinheit eine diskrete zeitliche Folge von Messwerten generiert, wobei die Differenz zweier Messwerte dieser Folge gebildet ist, und wobei anhand dieser Differenz die Filterkoeffizienten des adaptiven Filters gebildet sind.

Insbesondere werden aufeinander folgende Messwerte jeweils von demselben Zeitintervall T zueinander versetzt, das heißt die Messwerte werden in einem konstanten, fest vorgegebenen Takt generiert.

Wesentlich ist, dass die Differenzen von Messwerten Eingangsgrößen bilden, anhand derer die Filterkoeffizienten berechnet werden. Die Differenzen der Messwerte geben ein direktes Maß für die zeitliche Änderung der Messwerte, das heißt durch diese Eingangsgrößen werden die Filterkoeffizienten optimal an die auftretenden Änderungen der Messwerte angepasst.

Besonders vorteilhaft werden zur Bildung einer Differenz der aktuelle Messwert und ein früherer Messwert herangezogen.

Da die Differenz stets auf den aktuellen Messwert bezogen ist, erfolgt zeitabhängig eine Adaption der Filterkoeffizienten an die aktuelle Änderung des Messwerts, das heißt die Filterkoeffizienten werden an die aktuelle Relativgeschwindigkeit zwischen optischem Sensor und Objekt fortlaufend angepasst, wodurch die Filterung an den aktuellen Bewegungszustand des Objekts angepasst ist und demzufolge eine hohe Messwertgenauigkeit erreicht wird.

Besonders vorteilhaft wird der zur Bildung der Differenz herangezogene frühere Messwert abhängig von der Geschwindigkeit des Objekts relativ zum optischen Sensor gewählt.

Insbesondere wird zur Bildung der Differenz neben dem aktuellen Messwert bei großen Geschwindigkeiten des Objekts der dem aktuellen Messwert vorangehende Messwert und bei kleinen Geschwindigkeiten der Objekte ein früherer Messwert herangezogen.

Durch die Anpassung der Art der Differenzbildung an die aktuelle Geschwindigkeit kann auch die Art der Filterung an diese Geschwindigkeit angepasst und optimiert werden.

Diese Adaption kann selbsttätig während des Betriebs des optischen Sensors erfolgen, wobei zur Ermittlung der Geschwindigkeit anhand der Messwerte bestimmt wird, wie groß deren Änderung pro Zeiteinheit ist. Die so ermittelte Änderungsgeschwindigkeit kann dann beispielsweise mit vorgegebenen Schwellwerten verglichen werden, wodurch sich verschiedene Einstellbereiche ergeben, in welchen die Art der Differenzbildung in unterschiedlicher Weise vorgegeben werden kann.

Hierbei wird insbesondere berücksichtigt, dass bei hohen Geschwindigkeiten die durch Rauschen bedingten Messwertschwankungen gering gegenüber den geschwindigkeitsbedingten Änderungen sind. In diesem Fall ist das Messwertrauschen von untergeordneter Bedeutung. Vielmehr muss die Anpassung der Filterkoeffizienten möglichst schnell an die aktuelle Geschwindigkeitsänderung erfolgen. Daher wird in diesem Fall die zur Bestimmung der Filterkoeffizienten verwendete Differenz vom aktuellen Messwert und dem diesem unmittelbar vorangehenden Messwert gebildet.

Bei kleinen Geschwindigkeiten dominiert dagegen das Messwertrauschen über die geschwindigkeitsbedingten Messwertänderungen. In diesem Fall wird zur Bildung der Differenz neben dem aktuellen Messwert nicht der unmittelbar vorangehende sondern ein weiter zurückliegender Messwert herangezogen. Der Messwert liegt dabei vorteilhaft umso weiter bezüglich des aktuellen Messwerts zurück, je kleiner die Geschwindigkeit ist, um so eine hinreichend große Differenz zu generieren, die sich für die Anpassung der Filterkoeffizienten noch eignet.

Ein Anwendungsbeispiel hierfür ist ein auf einem fahrbaren Regalbediengerät angebrachter optischer Sensor in Form eines Distanzsensors, dessen Messwerte zur Positionierung des Regalbediengeräts verwendet werden. Zur Positionierung des Regalbediengeräts ist ein Lageregelkreis vorgesehen, in welchem die Distanzwerte verwendet werden. Je nachdem, ob die Fahrtgeschwindigkeit des Regalbediengeräts groß oder klein ist, können die zur Bestimmung der Filterkoeffizienten des adaptiven Filters herangezogenen Differenzen von Messwerten wie beschrieben geschwindigkeitsabhängig definiert werden.

Gemäß einer konstruktiv vorteilhaften Ausführungsform weist das adaptive Filter ein Filter mit variablem Filterkoeffizienten und eine Rechnereinheit auf, welche zur Bestimmung der Filterkoeffizienten für das Filter ausgebildet ist.

Dabei ist bevorzugt die Rechnereinheit ein digitaler Signalprozessor.

Gemäß einer ersten Variante ist der optische Sensor ein Distanzsensor.

Dabei wird insbesondere im Distanzsensor eine Distanzmessung nach einem Phasenmessverfahren oder einem Impuls-Laufzeitverfahren durchgeführt.

Gemäß einer zweiten Variante ist der optische Sensor ein Codeleser, mittels dessen in Marken eines Positionsmaßsystems enthaltende Codes erfassbar sind, wobei in den Codes einer Marke jeweils deren Position innerhalb des Positionsmaßsystems kodiert ist.

Die Erfindung wird im Folgenden anhand der Zeichnungen erläutert:
- Figur 1:: Schematische Darstellung eines ersten Ausführungsbeispiels des erfindungsgemäßen optischen Sensors mit einem zugeordneten Positionsmaßsystem.
- Figur 2:: Schematische Darstellung eines zweiten Ausführungsbeispiels des erfindungsgemäßen optischen Sensors.
- Figur 3:: Darstellung der Komponenten zur adaptiven Filterung von Messwerten des optischen Sensors gemäß Figur 1 beziehungsweise Figur 2.

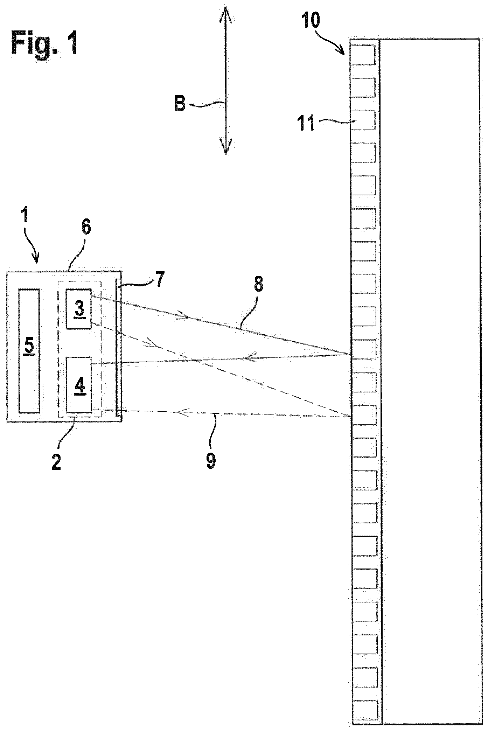

Figur 1 zeigt schematisch ein Ausführungsbeispiel des erfindungsgemäßen optischen Sensors 1 und einem Positionsmaßsystem 10. Der optische Sensor 1 und/oder das Positionsmaßsystem 10 sind beweglich angeordnet, so dass diese in der mit dem Pfeil B gekennzeichneten Bewegungsrichtung gegeneinander bewegbar sind. Mit der in Figur 1 dargestellten Anordnung können relativ zueinander bewegbare Gegenstände positioniert werden. Im vorliegenden Fall ist ein nicht dargestelltes Fahrzeug gegenüber einem stationären Gegenstand in Form eines Regallagers oder dergleichen zu positionieren. Der optische Sensor 1 ist dabei an dem Fahrzeug montiert, während das Positionsmaßsystem 10 am Regallager montiert ist.

Zur Erfassung der Fahrzeugposition relativ zum stationären Gegenstand wird das Positionsmaßsystem 10 fortlaufend mit dem optischen Sensor 1 abgetastet.

Der optische Sensor 1 gemäß Figur 1 umfasst eine Sende-/Empfangseinheit 2, die als Sender 3 eine Beleuchtungseinheit und als Empfänger 4 eine Flächenkamera aufweist, die an eine gemeinsame Auswerteeinheit 5 angeschlossen sind. Diese Komponenten des optischen Sensors 1 sind in einem Gehäuse 6 untergebracht, in dessen Frontwand ein lichtdurchlässiges Fenster 7 vorgesehen ist.

Die Flächenkamera ist als CCD-Kamera, CMOS-Kamera oder dergleichen ausgebildet und weist eine flächige matrixförmige Anordnung von Empfangselementen bildenden Pixeln auf. Der optische Sensor 1 ist dabei derart am Fahrzeug montiert, dass die Flächenkamera dem Positionsmaßsystem 10 auf gleicher Höhe gegenüberliegt, so dass ein Segment des Positionsmaßsystems 10 im Sichtfeld der Flächenkamera liegt. Somit treffen vom Sender 3 emittiert Sendelichtstrahlen 8 auf das Positionsmaßsystem 10 und werden als Empfangslichtstrahlen 9 zurück zum Empfänger 4 reflektiert.

Das Positionsmaßsystem 10 besteht aus einer Linearanordnung von äquidistant in Reihe angeordneten Marken, wobei die Marken im vorliegenden Fall als Barcodes 11 ausgebildet sind. Dabei können sowohl eindimensionale als auch zweidimensionale Barcodes 11 eingesetzt werden.

In den Marken sind als Positionsinformationen deren Absolutpositionen innerhalb des Positionsmaßsystems 10 kodiert. Durch die Erfassung der Kodierung der Marken und deren Lagen innerhalb der mit der Flächenkamera aufgenommenen Bilder kann die aktuelle Position des optischen Sensors 1 und damit des Fahrzeugs relativ zum Positionsmaßsystem 10 bestimmt werden.

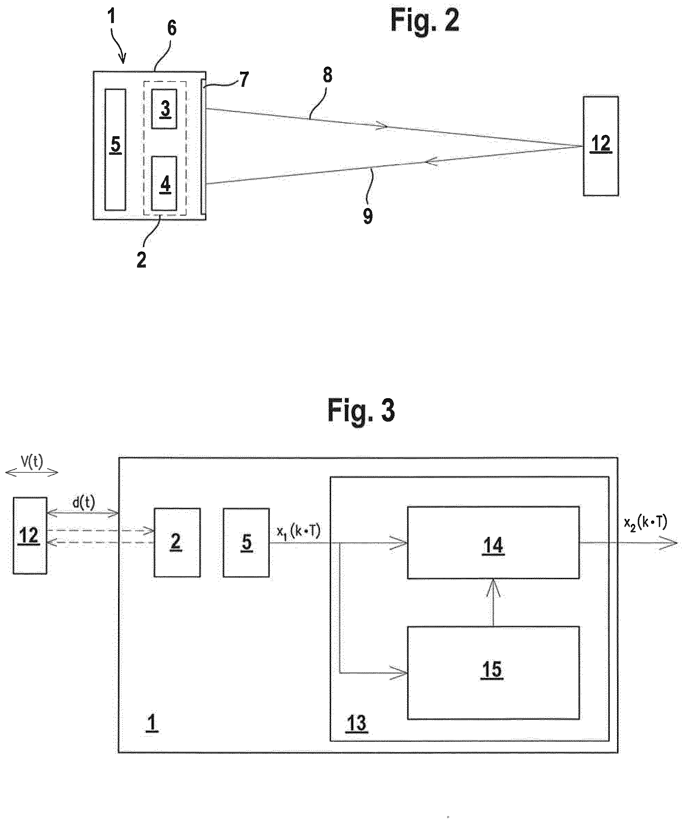

Figur 2 zeigt ein weiteres Ausführungsbeispiel eines optischen Sensors 1. Dieser optische Sensor 1 ist als Distanzsensor ausgebildet, der als Sender 3 eine Laserdiode aufweist und als Empfänger 4 eine Photodiode aufweist. Der Sender 3 und der Empfänger 4 bilden eine Sende-/Empfangseinheit 2, die wieder einer Auswerteeinheit 5 zugeordnet ist. Die Sensorkomponenten sind wieder in einem Gehäuse 6 mit einem Fenster 7 integriert. Die Auswerteeinheit 5 dient zur Steuerung des Betriebes des Senders 3 und zur Auswertung der im Empfänger 4 generierten Empfangssignale.

Die Distanzmessung erfolgt nach einem Impuls-Laufzeitverfahren. Der Sender 3 emittiert hierzu Sendelichtstrahlen 8 in Form von einer Folge von Lichtimpulsen, die auf ein zu detektierendes Objekt 12 treffen und von dort als Empfangslichtstrahlen 9 zum Empfänger 4 zurückreflektiert werden. In der Auswerteeinheit 5 wird aus der Laufzeit der Lichtimpulse zum Objekt 12 und zurück zum optischen Sensor 1 die Distanz des Objekts 12 berechnet.

Figur 3 zeigt die Anordnung zur Filterung der im optischen Sensor 1 generierten Messwerte, das heißt der Distanzwert im Fall der Ausführungsform gemäß Figur 1, und der Distanzwert im Fall der Ausführungsform gemäß Figur 2.

In Figur 3 sind die Sende-/Empfangseinheit 2 des optischen Sensors 1 mit den Sendelichtstrahlen 8 und Empfangslichtstrahlen 9 zur Detektion eines Objekts 12 mit der zugeordneten Auswerteeinheit 5 dargestellt. Wie Figur 3 zeigt, sind die Distanz d (t) des Objekts 12 und dessen Geschwindigkeit v (t) zeitabhängig und variabel.

Erfindungsgemäß ist der Auswerteeinheit 5 ein adaptives Filter 13 nachgeordnet, dem die in der Auswerteeinheit 5 ermittelten Messwerte x₁ (k • T), das heißt ein Distanzwert oder Positionswert, zugeführt werden. Die Messwerte bilden eine diskrete zeitliche Folge, wobei jeweils zwei aufeinander folgende Messwerte x₁ (k • T) und x₁ ((k - 1) • T) jeweils um dasselbe Zeitintervall T gegeneinander verschoben sind, das heißt die einzelnen Messwerte x₁ (k • T) folgen in äquidistanten Zeitintervallen aufeinander.

Das adaptive Filter 13 besteht aus einem Filter 14 mit variablen Filterkoeffizienten und einer zugeordneten Rechnereinheit 15 in Form eines digitalen Signalprozessors. Im vorliegenden Fall ist das Filter 14 ein rekursiver Filter, wobei dieses von einem rekursiven IIR-Filter 2. Ordnung gebildet ist.

Wie Figur 3 zeigt, werden die aktuellen Messwerte x₁ (k • T) von der Auswerteeinheit 5 sowohl dem Filter 14 als auch der Rechnereinheit 15 zugeführt.

In der Rechnereinheit 15 wird die Differenz d aus dem aktuellen Messwert x₁ (k • T) und einem vorangegangenen Messwert x₁ ((k - N) • T), wobei N eine ganze Zahl größer oder gleich 1 ist, gebildet.

Diese Differenz d bildet eine Eingangsgröße, mittels derer die Filterkoeffizienten für das Filter 14 aktuell berechnet werden. Mit den so bestimmten Filterkoeffizienten wird dann im Filter 14 eine Messwertfilterung durchgeführt. Diese gefilterten Messwerte sind in Figur 3 mit x₂ (k • T) bezeichnet. Diese gefilterten Messwerte x₂ (k • T) bilden dann die Ausgabegrößen des optischen Sensors 1.

Erfindungsgemäß wird in der Auswerteeinheit 5 oder in der Rechnereinheit 15 die Objektgeschwindigkeit dadurch berechnet, dass erfasst wird, wie schnell sich die Messwerte pro Zeiteinheit ändern. Abhängig von der Objektgeschwindigkeit wird in der Rechnereinheit 15 eine hieran angepasste Differenzbildung der Messwerte durchgeführt, wobei dann die so gebildeten Differenzen zur Bestimmung der Filterkoeffizient für das Filter 14 verwendet werden.

Wird beispielsweise durch eine Schwellwertbewertung in der Rechnereinheit 15 festgestellt, dass die Objektgeschwindigkeit groß ist, wird die Differenz des aktuellen Messwerts x₁ (k • T) mit dem unmittelbar vorhergehenden Messwert x₁ ((k - 1) • T) gebildet und zur Bestimmung der Filterkoeffizienten des Filters 14 verwendet.

Ist dagegen die Objektgeschwindigkeit klein, wird die Differenz des aktuellen Messwerts x₁ (k • T) und einem früheren Messwert x₁ ((k - N) • T), wobei N ≥ 2, gebildet. Dabei wird zweckmäßig N umso größer gewählt, je geringer die Objektgeschwindigkeit ist.

Damit wird während des Betriebs des optischen Sensors 1 eine an die Objektgeschwindigkeit fortlaufend optimierte Filterung der Messwerte des optischen Sensors 1 erhalten, wodurch dessen Messgenauigkeit erheblich verbessert wird.

### Bezugszeichenliste

- (1): optischer Sensor
- (2): Sende-/Empfangseinheit
- (3): Sender
- (4): Empfänger
- (5): Auswerteeinheit
- (6): Gehäuse
- (7): Fenster
- (8): Sendelichtstrahlen
- (9): Empfangslichtstrahlen
- (10): Positionsmaßsystem
- (11): Barcodes
- (12): Objekt
- (13): adaptives Filter
- (14): Filter
- (15): Rechnereinheit

## Patentansprüche

1. Optischer Sensor (1) zur Detektion von Objekten (12) mit einer Sende-/Empfangseinheit (2) umfassend einen Sendelichtstrahlen (8) emittierenden Sender (3) und einen Empfangslichtstrahlen (9) empfangenden Empfänger (4) und mit einer Auswerteeinheit (5), in welcher in Abhängigkeit von Empfangssignalen des Empfängers (4) eine zeitliche Folge von Messwerten generiert ist, wobei die Messwerte Distanzwerte oder Positionswerte sind, **dadurch gekennzeichnet, dass** ein adaptives Filter (13) in Form eines rekursiven IIR-Filters zweiter Ordnung vorgesehen ist, in welchem die Messwerte gefiltert sind, wobei das adaptive Filter (13) variable Filterkoeffizienten aufweist, die an die aktuellen Änderungen der Messwerte angepasst sind.

2. Optischer Sensor (1) nach Anspruch 1, **dadurch gekennzeichnet, dass** in der Auswerteeinheit (5) eine diskrete zeitliche Folge von Messwerten generiert ist, wobei die Differenz zweier Messwerte dieser Folge gebildet ist, und dass anhand dieser Differenz die Filterkoeffizienten des adaptiven Filters (13) gebildet sind.

3. Optischer Sensor (1) nach Anspruch 2, **dadurch gekennzeichnet, dass** aufeinander folgende Messwerte jeweils von demselben Zeitintervall T zueinander versetzt sind.

4. Optischer Sensor (1) nach einem der Ansprüche 2 oder 3, **dadurch gekennzeichnet, dass** zur Bildung einer Differenz der aktuelle Messwert und ein früherer Messwert herangezogen wird.

5. Optischer Sensor (1) nach Anspruch 4, **dadurch gekennzeichnet, dass** der zur Bildung der Differenz herangezogene frühere Messwert abhängig von der Geschwindigkeit des Objekts (12) relativ zum optischen Sensor (1) gewählt ist.

6. Optischer Sensor (1) nach Anspruch 5, **dadurch gekennzeichnet, dass** zur Bildung der Differenz neben dem aktuellen Messwert bei großen Geschwindigkeiten des Objekts (12) der dem aktuellen Messwert vorangehende Messwert und bei kleiner Geschwindigkeiten der Objekte (12) ein früherer Messwert herangezogen wird.

7. Optischer Sensor (1) nach einem der Ansprüche 5 oder 6, **dadurch gekennzeichnet, dass** die Geschwindigkeit des Objekts (12) aus dem Messwert bestimmt ist.

8. Optischer Sensor (1) nach einem der Ansprüche 1 bis 7, **dadurch gekennzeichnet, dass** das adaptive Filter (13) ein Filter mit variablem Filterkoeffizienten und eine Rechnereinheit (15), welche zur Bestimmung der Filterkoeffizient für das Filter (14) ausgebildet ist, aufweist.

9. Optischer Sensor (1) nach Anspruch 8, **dadurch gekennzeichnet, dass** die Rechnereinheit (15) ein digitaler Signalprozessor ist.

10. Optischer Sensor (1) nach einem der Ansprüche 1 bis 9, **dadurch gekennzeichnet, dass** dieser ein Distanzsensor ist.

11. Optischer Sensor (1) nach Anspruch 10, **dadurch gekennzeichnet, dass** im Distanzsensor eine Distanzmessung nach einem Phasenmessverfahren oder einem Impuls-Laufzeitverfahren durchgeführt ist.

12. Optischer Sensor (1) nach einem der Ansprüche 1 bis 9, **dadurch gekennzeichnet, dass** dieser ein Codeleser ist, mittels dessen in Marken eines Positionsmaßsystems (10) enthaltende Codes erfassbar sind, wobei in den Codes einer Marke jeweils deren Position innerhalb des Positionsmaßsystems (10) kodiert ist.

13. Verfahren zur Detektion von Objekten (12) mittels eines optischen Sensors (1), wobei der optische Sensor (1) eine Sende-/Empfangseinheit (2), umfassend wenigstens einen Sendlichtstrahlen (8) emittierenden Sender (3) und einen Empfangslichtstrahlen (9) empfangenden Empfänger (4) sowie eine Auswerteeinheit (5) aufweist, in welcher in Abhängigkeit von Empfangssignalen des Empfängers (4) eine zeitliche Folge von Messwerten generiert wird, wobei die Messwerte Distanzwerte oder Positionswerte sind, **dadurch gekennzeichnet, dass** in einem adaptiven Filter (13) in Form eines rekursiven IIR-Filters zweiter Ordnung die Messwerte gefiltert werden, wobei das adaptive Filter (13) variable Filterkoeffizienten aufweist, die an die aktuellen Änderungen der Messwerte angepasst werden.

## Claims

1. An optical sensor (1) for detecting objects (12), having a transmitting/receiving unit (2) comprising a transmitter (3) emitting transmitted light beams (8) and a receiver (4) receiving received light beams (9), and having an evaluation unit (5) in which a time sequence of measured values is generated as a function of received signals from the receiver (4), wherein the measured values are distance values or position values, **characterised in that** an adaptive filter (13) in the form of a second-order recursive IIR filter is provided, in which the measured values are filtered, wherein the adaptive filter (13) has variable filter coefficients which are adapted to the current changes in the measured values.

2. The optical sensor (1) according to claim 1, **characterised in that** a discrete temporal sequence of measured values is generated in the evaluation unit (5), the difference between two measured values of this sequence being formed, and **in that** the filter coefficients of the adaptive filter (13) are formed on the basis of this difference.

3. The optical sensor (1) according to claim 2, **characterised in that** successive measurement values are in each case offset from one another by the same time interval T.

4. The optical sensor (1) according to one of claims 2 or 3, **characterised in that** the current measured value and an earlier measured value are used to form a difference.

5. The optical sensor (1) according to claim 4, **characterised in that** the earlier measured value used to form the difference is selected depending on the speed of the object (12) relative to the optical sensor (1).

6. The optical sensor (1) according to claim 5, **characterised in that**, in addition to the current measured value, the measured value preceding the current measured value is used to form the difference in the case of high speeds of the object (12) and an earlier measured value is used in the case of low speeds of the objects (12).

7. The optical sensor (1) according to one of claims 5 or 6, **characterised in that** the speed of the object (12) is determined from the measured value.

8. The optical sensor (1) according to one of the claims 1 to 7, **characterised in that** the adaptive filter (13) comprises a filter with a variable filter coefficient and a computer unit (15) which is designed to determine the filter coefficient for the filter (14).

9. The optical sensor (1) according to claim 8, **characterised in that** the computer unit (15) is a digital signal processor.

10. The optical sensor (1) according to one of the claims 1 to 9, **characterised in that** it is a distance sensor.

11. The optical sensor (1) according to claim 10, **characterised in that** a distance measurement is carried out in the distance sensor according to a phase measurement method or a pulse transit time method.

12. The optical sensor (1) according to one of the claims 1 to 9, **characterised in that** it is a code reader by means of which the distance measurement contained in markers of a position measurement system (10) can be detected, wherein the position of a mark within the position measurement system (10) is encoded in the codes of the mark.

13. A method for detecting objects (12) by means of an optical sensor (1), the optical sensor (1) having a transmitter/receiver unit (2) comprising at least one transmitter (3) emitting transmitted light beams (8) and a receiver (4) receiving received light beams (9), and an evaluation unit (5) in which a time sequence of measured values is generated as a function of received signals from the receiver (4), the measured values being distance values or position values, **characterised in that** the measured values are filtered in an adaptive filter (13) in the form of a second-order recursive IIR filter, the adaptive filter (13) having variable filter coefficients which are adapted to the current changes in the measured values.

## Revendications

1. Capteur optique (1) pour la détection d'objets (12), comprenant une unité d'émission/ réception (2) comprenant un émetteur (3) émettant des rayons lumineux d'émission (8) et un récepteur (4) recevant des rayons lumineux de réception (9), et une unité d'évaluation (5) dans laquelle une séquence temporelle de valeurs mesurées est générée en fonction des signaux de réception du récepteur (4), les valeurs de mesure étant des valeurs de distance ou des valeurs de position, **caractérisé en ce qu'**il est prévu un filtre adaptatif (13) sous la forme d'un filtre RII récursif du second ordre, dans lequel les valeurs de mesure sont filtrées, le filtre adaptatif (13) présentant des coefficients de filtre variables qui sont adaptés aux variations actuelles des valeurs de mesure.

2. Capteur optique (1) selon la revendication 1, **caractérisé en ce qu'**une séquence temporelle discrète de valeurs de mesure est générée dans l'unité d'évaluation (5), la différence entre deux valeurs de mesure de cette séquence étant formée, et **en ce que** les coefficients de filtre du filtre adaptatif (13) sont formés sur la base de cette différence.

3. Capteur optique (1) selon la revendication 2, **caractérisé en ce que** des valeurs de mesure successives sont à chaque fois décalées les unes par rapport aux autres du même intervalle de temps T.

4. Capteur optique (1) selon l'une des revendications 2 ou 3, **caractérisé en ce que** la valeur de mesure actuelle et une valeur de mesure antérieure sont utilisées pour former une différence.

5. Capteur optique (1) selon la revendication 4, **caractérisé en ce que** la valeur mesurée antérieure utilisée pour former la différence est sélectionnée en fonction de la vitesse de l'objet (12) par rapport au capteur optique (1).

6. Capteur optique (1) selon la revendication 5, **caractérisé en ce que**, en plus de la valeur de mesure actuelle, la valeur de mesure précédant la valeur de mesure actuelle est utilisée pour former la différence dans le cas de vitesses élevées de l'objet (12) et une valeur de mesure antérieure est utilisée dans le cas de vitesses faibles des objets (12).

7. Capteur optique (1) selon l'une des revendications 5 ou 6, **caractérisé en ce que** la vitesse de l'objet (12) est déterminée à partir de la valeur mesurée.

8. Capteur optique (1) selon l'une des revendications 1 à 7, **caractérisé en ce que** le filtre adaptatif (13) comprend un filtre à coefficient de filtre variable et une unité de calcul (15) qui est conçue pour déterminer le coefficient de filtre pour le filtre (14).

9. Capteur optique (1) selon la revendication 8, **caractérisé en ce que** l'unité informatique (15) est un processeur de signal numérique.

10. Capteur optique (1) selon l'une des revendications 1 à 9, **caractérisé en ce qu'**il est un capteur de distance.

11. Capteur optique (1) selon la revendication 10, **caractérisé en ce qu'**une mesure de distance est réalisée dans le capteur de distance selon un procédé de mesure de phase ou un procédé de temps de transit d'impulsion.

12. Capteur optique (1) selon l'une des revendications 1 à 9, **caractérisé en ce qu'**il s'agit d'un lecteur de code au moyen duquel la mesure de distance contenue dans des repères d'un système de mesure de position (10) peut être détectée, la position d'un repère à l'intérieur du système de mesure de position (10) étant codée dans les codes du repère.

13. Procédé de détection d'objets (12) à l'aide d'un capteur optique (1), le capteur optique (1) présentant une unité d'émission/réception (2) comprenant au moins un émetteur (3) émettant des rayons lumineux d'émission (8) et un récepteur (4) recevant des rayons lumineux de réception (9), ainsi qu'une unité d'évaluation (5) dans laquelle une séquence temporelle de valeurs de mesure est générée en fonction des signaux de réception du récepteur (4), les valeurs de mesure étant des valeurs de distance ou des valeurs de position, **caractérisé en ce que** les valeurs de mesure sont filtrées dans un filtre adaptatif (13) sous la forme d'un filtre RII récursif du second ordre, le filtre adaptatif (13) présentant des coefficients de filtre variables qui sont adaptés aux variations actuelles des valeurs de mesure.
